# EUROPÄISCHE PATENTSCHRIFT

(11) **EP 2 751 429 B1**
(45) Veröffentlichungstag und Bekanntmachung des Hinweises auf die Patenterteilung: **19.12.2018**
(21) Anmeldenummer: 12758818.4
(22) Anmeldetag: 28.08.2012
(51) Int. Cl.: F04D 17/12, F04D 25/08, F04D 29/58

(54) **TURBOKOMPRESSOR UND VERWENDUNG**
TURBOCOMPRESSOR AND USE
TURBOCOMPRESSEUR ET SON UTILISATION

(30) Priorität: 30.08.2011 DE 102011081801; 27.08.2012 DE 102012016844
(43) Veröffentlichungstag der Anmeldung: 09.07.2014
(73) Patentinhaber: KSB SE & Co. KGaA, 67227 Frankenthal (DE)
(72) Erfinder: WEILENMANN, Urs, 8704 Herrliberg (CH); FRIEDL, Markus, 8001 Zürich (CH); UHLENHAUT, Dirk Ingmar, 8006 Zürich (CH)
(86) Internationale Anmeldenummer: PCT/EP2012/066672
(87) Internationale Veröffentlichungsnummer: WO 2013/030184

(56) Entgegenhaltungen:
- GB-A- 381 561
- US-A- 5 363 674
- US-A1- 2004 055 740
- US-B1- 6 390 789

## Beschreibung

Die Erfindung betrifft einen Radial-Turbokompressor mit mindestens zwei Verdichterstufen, wobei ein Motor Radial-Laufräder der Verdichterstufen antreibt, die auf einer Welle angeordnet sind, wobei der Motor und die Verdichterstufen in einem gemeinsamen Gehäuse angeordnet sind und ein Medium durch eine Ansaugöffnung in das Gehäuse eintritt, wobei ein Teil des Mediums durch den Motor geleitet wird und ein anderer Teil an dem Motor vorbei strömt, dann werden beide Teile wieder zusammengeführt, verdichtet und treten durch eine Ausblasöffnung aus dem Gehäuse aus.

Zur Förderung von Gasen können entweder Gebläse oder Kompressoren eingesetzt werden. Diese unterscheiden sich grundlegend in ihrem Aufbau und in ihrem Einsatzgebiet. Im Gegensatz zu Kompressoren sind Gebläse auf große Förderströme ausgelegt und erzeugen nur eine geringe Drucksteigerung.

In der DE 600 16 886 T2 wird ein Gebläse beschrieben, das als Luftpumpe dient und zum Aufblasen von Luftmatratzen, Fahrradreifen oder Spielbällen eingesetzt wird. Die Luft wird von Flügelrädern gefördert, die in einem Gehäuse aus Hartplastik angeordnet sind.

In der GB 381561 wird ein Kompressor eines Kühlschrankes gezeigt, bei dem die Aufnahme und die Abgabe des geförderten Fluids in zwei großen Teilräumen stattfindet. Kompressoren sind, wie der Name bereits sagt, auf das Komprimieren von Gasen ausgelegt. Während dieses Prozesses kann das Gas bei entsprechenden Betriebsbedingungen auch einen überkritischen Zustand einnehmen. Der erfindungsgemäße Turbokompressor wird vorzugsweise zur Förderung von Kohlendioxid eingesetzt. Beim Verdichtungsvorgang geht das Kohlendioxid von einem gasförmigen in einen überkritischen Zustand über, da die kritische Temperatur nur 31,0 °C beträgt und Kohlendioxid einen verhältnismäßig niedrigen kritischen Druck, von nur 73,8 bar, hat. Manchmal liegt das Kohlendioxid bereits beim Eintritt in den Kompressor überkritisch vor. Um sowohl Gase als auch überkritische Fluide zu umfassen, wird im Rahmen der Erfindung von einem Medium gesprochen, das verdichtet wird.

Kompressoren können entweder nach dem Verdrängungsprinzip oder dem dynamischen Prinzip arbeiten. Beim Verdrängungsprinzip erfolgt die Verdichtung durch das Einschließen einer Gasportion und anschließender Verkleinerung des Raumes für die Gasportion. Verdichter, die nach dem Verdrängungsprinzip arbeiten, sind beispielsweise Hubkolbenverdichter oder Rotationskolbenverdichter.

Bei der vorliegenden Erfindung handelt es sich dagegen um Kompressoren, die nach dem dynamischen Prinzip arbeiten. Beim dynamischen Prinzip wird das Gas in einem Laufrad stark beschleunigt und durch Abbremsen in einem nachgeschalteten Diffusor verdichtet. Kompressoren, die nach dem dynamischen Prinzip arbeiten, heißen Turbokompressoren.

Turbokompressoren unterteilen sich in die Hauptbauarten Axial-Turbokompressoren und Radial-Turbokompressoren. Bei Axial-Turbokompressoren strömt das Gas in paralleler Richtung zur Welle durch den Kompressor.

Bei der vorliegenden Erfindung handelt es sich um Radial-Turbokompressoren. Das Gas strömt axial in das Laufrad der Verdichterstufe und wird dann von der Fliehkraft im düsenartig sich verengenden Laufradzwischenraum radial nach außen beschleunigt. Am Laufradumfang verlässt das Gas mit großer Geschwindigkeit die Laufradzwischenräume und strömt in den Diffusor. Bei herkömmlichen Radial-Turbokompressoren strömt das Gas nach der letzten Verdichterstufe durch einen vertikal zur Rotorachse gerichteten Druckstutzen radial nach außen ab.

Die Verdichterstufen werden von einem Motor angetrieben. Der Elektromotor umfasst einen Rotor und einen Stator. Bei der vorliegenden Erfindung sind der Rotor und die radialen Laufräder auf einer gemeinsamen Welle angeordnet.

Im Stand der Technik sind Ausführungen bekannt bei der die Verdichterstufen und der Motor jeweils von einem eigenen Gehäuse umgeben werden, wobei die Motorwelle aus dem Motorgehäuse herausgeführt und in das Verdichterstufengehäuse eingeführt wird.

Dagegen sind bei der vorliegenden Erfindung der Motor und die Verdichterstufen in einem gemeinsamen Gehäuse angeordnet. Durch eine Ansaugöffnung tritt das Gas in das Gehäuse ein. Das unverdichtete Medium strömt zuerst an dem Motor vorbei und wird dann verdichtet. Nach Durchlaufen der Verdichterstufen tritt das Medium durch eine Ausblasöffnung aus dem Gehäuse.

Bei herkömmlichen Radial-Turbokompressoren ist das Gehäuse häufig horizontal geteilt. Beim Zusammenbau wird in die untere Hälfte des Gehäuses die Welle samt der Laufräder platziert. Die obere Hälfte des Gehäuses enthält den Ansaugstutzen und den Druckstutzen, die senkrecht nach außen an der oberen Hälfte des Gehäuses angeformt sind. Dann werden die beiden Hälften zusammengesetzt. Durch die vertikal zur Drehachse der Welle nach außen ragenden Stutzen wird das Medium zu- und abgeführt.

Turbokompressoren müssen häufig innerhalb eines Maschinengebäudes integriert werden. Dabei sind meist Platzprobleme, aufgrund der Anordnung zahlreicher anderer Apparate und Maschinen, zu lösen. Zudem muss ein weitgehend vibrationsfreier Betrieb des Turbokompressors gewährleistet sein, um weder die Maschine selbst noch benachbarte Apparate zu beschädigen. Dazu ist eine aufwendige Lagerung des Rotors mittels Axial- und Radiallagern erforderlich. Zur Kompensation des Axialschubs der Laufräder sind aufwendige Lagerkonstruktionen notwendig.

Vor diesem technologischen Hintergrund ist der vorliegende Turbokompressor derart konstruiert, dass er eine kompakte und stabile Bauweise dadurch aufweist und auf einfache und kostengünstige Weise den Axialschub kompensiert, dass die Ausblasöffnung in axialer Richtung mittig zur Drehachse der Welle angeordnet ist.

Das Medium strömt in der letzten Verdichterstufe zunächst durch ein Radiallaufrad und wird dann in einen Diffusor geleitet. Ein Rückführkanal führt das Medium zu der axialen Ausblasöffnung.

Im Gegensatz zu herkömmlichen Turbokompressoren verlässt das Medium das Gehäuse nicht durch einen radial zur Welle angeordneten Druckstutzen, sondern durch eine axial zur Drehachse der Welle angeordnete Ausblasöffnung. Das Gehäuse ist als kompakter Druckbehälter ausgeführt, dessen zylindrischer Mantel keinen störenden Druckstutzen, sondern stattdessen eine Ausblasöffnung an der Deckfläche des Druckbehälters aufweist. Die bei der vorliegenden Erfindung eingesetzten Anschlussflansche sind im Vergleich zu senkrecht weggeführten Druckstutzen sehr stabil.

Die axiale Anordnung der Ausblasöffnung, mittig zur Welle, führt dazu, dass der Austrittsdruck des Mediums in axialer Richtung als Rückstoß auf das auslassseitige Wellenende wirkt. Dadurch wird der Axialschub kompensiert.

Vorzugsweise ist auch die Ansaugöffnung des Turboverdichters in axialer Richtung mittig zur Drehachse der Welle angeordnet. Das als zylindrischer Druckbehälter ausgeführte Gehäuse, weist dann keinerlei Stutzen an der Mantelfläche auf. Sowohl die Zuführung als auch die Abführung des Mediums erfolgt über die Deckflächen des zylindrischen Druckbehälters. Die Deckflächen sind vorzugsweise als gewölbte Böden an den Mantelteil des Druckbehälters angeformt. In einen Boden ist mittig die kreisförmige Ansaugöffnung eingebracht. In den gegenüberliegenden Boden ist mittig die kreisförmige Ausblasöffnung eingebracht.

Der beschriebene Kompressor verdichtet das durchgeleitete Medium auf sehr effiziente Weise, wobei jedoch eine erhebliche Wärmemenge im Motor freigesetzt werden kann. Die Aufgabe der Erfindung ist es, die anfallende Abwärme auf einfache und kostengünstige Weise abzuführen.
Die Laufräder des Turbokompressors werden vorzugsweise von einem Elektromotor angetrieben, der einen Rotor und einen Stator aufweist. Bei erfindungsgemäßen Ausführung des Kompressors wird das Medium in zwei Teilströme aufgeteilt, wobei ein erster Teilstrom des Mediums zwischen dem Stator des Motors und einem feststehenden Bauteil des Turboverdichters vorbeigeführt wird und ein zweiter Teilstrom durch den Motor, insbesondere zwischen Rotor und Stator des Motors geführt wird. Bei dem feststehenden Bauteil kann es sich um das Gehäuse selbst oder um ein mit dem Gehäuse verbundenes Bauteil handeln. Das vorbeigeleitete Medium nimmt Wärme auf und dient somit der Kühlung des Motors. Nach dem Passieren des Motorbereichs werden die beiden Teilströme wieder vereinigt und treten in die erste Verdichterstufe ein, in der das Medium verdichtet wird. Der zweite Teilstrom kann in einer Abwandlung auch durch den Stator des Motors geleitet werden. Hierzu müssen entsprechende Kanäle vorgesehen werden.

Erfindungsgemäß sind zwischen dem Motor und den Laufrädern Lager angeordnet, insbesondere Radial- und Axiallager. Die Anordnung an dieser Stelle verhindert eine übermäßige Erwärmung der Lager, da sich das Medium noch in nicht komprimiertem Zustand befindet.
Zur weiteren Entwärmung der Vorrichtung wird vorgeschlagen, die Oberfläche derart auszugestalten, dass ein Wärmeübertrag zwischen den einzelnen Bauteilen des Kompressors und dem Medium begünstigt wird. Hierbei ist die Oberfläche der Komponenten so aufzurauen, dass sie vergrößert ist, gleichzeitig ist die Bildung von Wirbeln deutlich zu verhindern. Wird dieser Übertrag dort vorgenommen, wo das Medium noch nicht komprimiert ist, ist der Temperaturunterschied zwischen Medium und Komponenten sehr groß, wodurch der Prozess begünstigt ist.

Die vorliegende Erfindung findet eine sehr vorteilhafte Anwendung beim Einsatz in einer Wärmepumpe, bei der ein Wärmeträgermedium gepumpt wird. Die anfallende Motorwärme wird diesem Wärmeträgermedium zugeführt, wodurch eine Steigerung der Gesamteffizienz einer derartigen Anlage gesteigert wird, da praktische keine elektrische Verlustleistung vorliegt. Bei der Kompression des Wärmeträgermediums kann die Motorabwärme direkt zurückgewonnen werden.

In einer vorteilhaften Ausgestaltung kommt als Wärmeträgermedium CO₂ zum Einsatz. Dieses Gas ist chemisch ungefährlich und preiswert nahezu überall verfügbar. Zum Einsatz in einer Wärmepumpe kann man es im kritischen Bereich handhaben, wo sich die physikalischen Eigenschaften besonders gut ausnutzen lassen.

Weitere Merkmale und Vorteile der Erfindung ergeben sich aus der Beschreibung eines Ausführungsbeispiels anhand von Zeichnungen und aus den Zeichnungen selbst. Dabei zeigt die
- Fig. 1: einen Axialschnitt des Turbokompressors, die
- Fig. 2: die Führungswege des Mediums im Turbokompressor, die
- Fig. 3: eine perspektivische Darstellung der Verdichterstufen, die
- Fig. 4: einen Axialschnitt der Verdichterstufen, die
- Fig. 5: eine perspektivische Schnittdarstellung des Gehäuses, die
- Fig. 6a: eine perspektivische Ansicht eines Radial-Laufrades und die
- Fig. 6b: eine perspektivische Ansicht eines Radial-Laufrades, dargestellt ohne Deckscheibe.

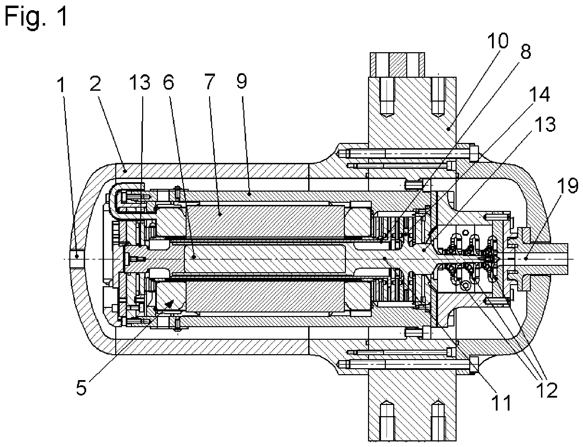

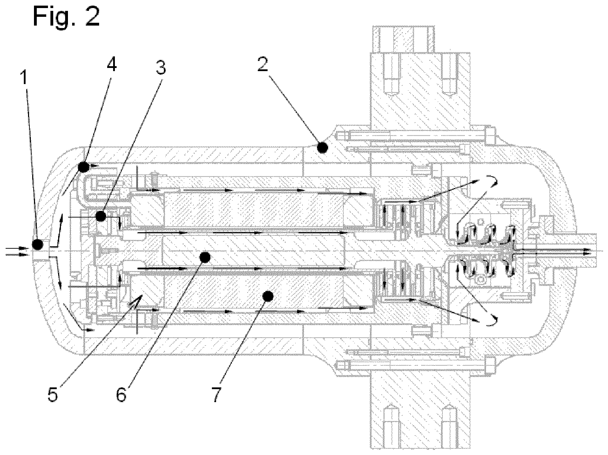

Fig. 1 zeigt einen Axialschnitt durch einen ölfreien Turbokompressor, der im Ausführungsbeispiel zur Förderung von Kohlendioxid ausgelegt ist. Die Führungswege des Kohlendioxids sind in Fig. 2 dargestellt. Im Folgenden wird parallel auf beide Figuren Bezug genommen, wobei in Fig. 1 die Bauteile benannt werden und in Fig. 2 die Führungswege zu erkennen sind.

Das Kohlendioxid tritt durch die Ansaugöffnung 1 in das Gehäuse 2 des Turbokompressors. Das Kohlendioxid hat im Ausführungsbeispiel an der Ansaugöffnung 1 einen Druck von 38 bar und eine Temperatur von 8 °C. Der Kohlendioxidstrom teilt sich in zwei Teilströme 3, 4 auf.

Das noch unverdichtete Kohlendioxid strömt am Motor 5 des Turboverdichters vorbei. Der Motor 5 ist als Elektromotor ausgeführt. Es handelt sich um eine zweipolige Permanentmagnetmaschine, die im Referenzpunkt mit 141000 U/Min dreht. Der Motor 5 ist auf der Niederdruckseite des Kompressors angeordnet. Er umfasst einen Rotor 6 und einen Stator 7. Der aktive Teil des Rotors 6 besteht aus einem zylindrischen, diametral magnetisierten Vollmagnet. Der Magnet ist aufgrund seiner mechanischen Eigenschaften ummantelt.

Der Stator 7 ist aus einzelnen Blechen aufgebaut. Die Nuten werden mit einer Isolierfolie gegen Kupferwicklungen isoliert. Die Kühlung des Motors 5 wird durch das vorbeiströmende Kohlendioxid erreicht.

Zwischen Rotor 6 und Stator 7 besteht ein Spalt. Der innere Teilstrom 4 strömt durch diesen Spalt zwischen Rotor 6 und Stator 7. Um Reibungsverluste zu verringern, kann im Spalt eine frei schwebende, axial gelagerte Hülse 8 eingesetzt sein. Der innere Teilstrom 4 wird zwischen dem Rotor 6 und der schwebenden Hülse 8 und zwischen Hülse 8 und Stator 7 hindurch geleitetet und führt dabei Wärme ab. Da die Spalten zwischen Hülse 8 und Rotor 6, sowie zwischen Hülse 8 und Stator 7 sehr klein sind, tritt ein Druckverlust auf, der bei der Auslegung des Turbokompressors berücksichtigt werden muss.

Der äußere Teilstrom 4 wird zwischen Stator 7 und einem feststehenden Bauteil 9 vorbei geführt. Bei dem feststehenden Bauteil 9 handelt es sich um eine innere Tragstruktur. Der äußere Teilstrom 4 kühlt den Stator 7. Er wird entlang der Wickelköpfe und des Blechpaketes geführt. Um das Verhältnis zwischen beiden Teilströmen 3, 4 einzustellen, ist im Pfad des äußeren Teilstroms 4 eine Drossel eingebaut. Als besonders vorteilhaft hat sich eine Aufteilung des äußeren Teilstroms 4 zum inneren Teilstrom 3 von 97 % zu 3 % erwiesen. Bei einem Anteil von 3 % des inneren Teilstroms kann der Rotor 6 auf ca. 50 °C gekühlt werden.

Der Stator 7 ist an der inneren Tragstruktur angebracht. Die innere Tragstruktur ihrerseits ist am Hauptflansch 10 des Gehäuses 2 befestigt.

Der Magnet des Rotors 6 ist in einer Welle 11 eingeschrumpft. Zudem sind auf der Welle 11 drei Radiallaufräder 12 befestigt. Die Welle 11 wird mit zwei Radial-Gaslagern 13 und einem Axial-Gaslager 14 gelagert. Der Turbokompressor ist völlig ölfrei.

Die beiden Teilströme 3, 4 werden vereinigt bevor sie in die erste Verdichterstufe eintreten. Das Kohlendioxid wird in den drei Verdichterstufen auf einen Druck von 90 bar verdichtet und tritt zur Ausblasöffnung 19 aus. Erfindungsgemäß ist die Ausblasöffnung 19 in axialer Richtung mittig zur Drehachse der Welle 11 angeordnet. Am Austritt liegt das Kohlendioxid in einem überkritischen Zustand vor.

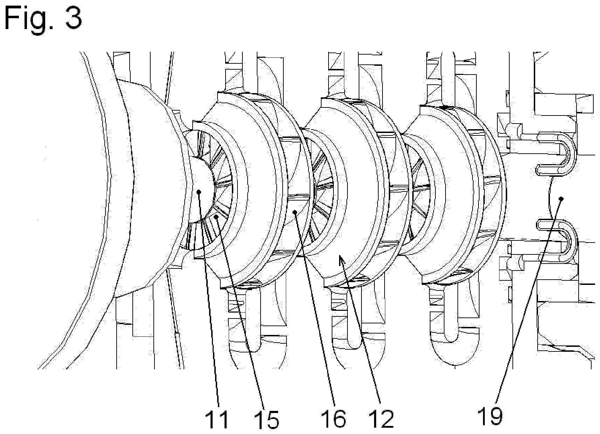

Fig. 3 zeigt die drei hintereinander angeordneten Radial-Laufräder 12. Die Radial-Laufräder 12 sind parallel nebeneinander auf der Welle 11 angeordnet. Es handelt sich dabei um geschlossene Radial-Laufräder. Das Kohlendioxid tritt in axialer Richtung in Eintrittsöffnungen 15 der Radial-Laufräder 12 ein und tritt in radialer Richtung aus den Austrittsöffnungen 16 aus. Die Verdichtung des Kohlendioxids erfolgt mit Blick auf die Abbildung von links nach rechts und somit immer in derselben axialen Richtung.

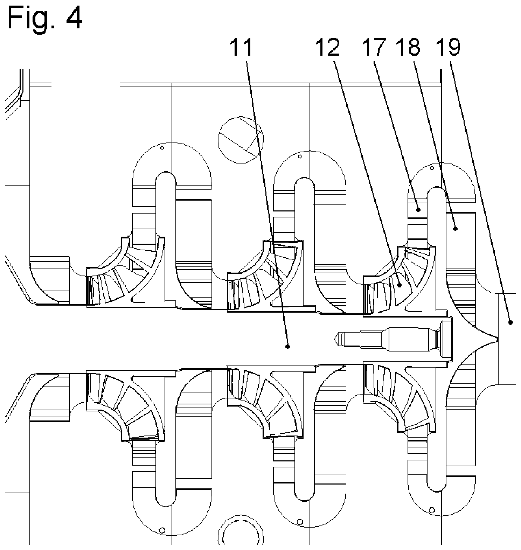

Fig. 4 zeigt einen Axialschnitt durch die drei Verdichterstufen. Das Kohlendioxid tritt nach dem Radial-Laufrad 12 in einen Diffusor 17 und strömt dann weiter in einen Rückführkanal 18. In den Radial-Laufrädern 12 wird dem Kohlendioxid kinetische Energie zugeführt, die in den Diffusoren 17 in Druckenergie umgewandelt wird. Die Rückführkanäle 18 führen das Kohlendioxid zur nächsten Verdichterstufe. Erfindungsgemäß strömt das Kohlendioxid in der letzten Verdichterstufe zunächst durch ein Radial-Laufrad 12, dann durch einen Diffusor 17 und dann durch einen Rückführkanal 18, der das Kohlendioxid direkt zur Ausblasöffnung 19 führt, die in axialer Richtung mittig zur Drehachse der Welle 11 angeordnet ist.

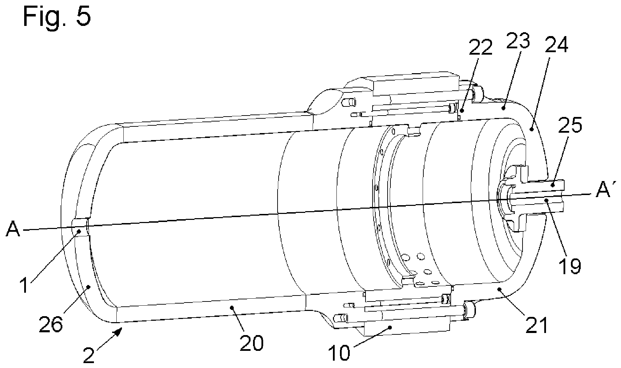

In Fig. 5 ist das Gehäuse 2 des Turbokompressors dargestellt. Das Gehäuse 2 ist als zylindrischer Druckbehälter ausgeführt. Erfindungsgemäß ist das Gehäuse 2 vertikal geteilt. Es besteht aus dem Hauptflansch 10, einem ansaugseitigen Teil 20 und einem ausblassseitigen Teil 21. Der ausblasseitige Teil 21 ist aus einem Flanschring 22, einem Rohrstück 23 und einem Klöpperboden 24 zu einem Bauteil zusammengeschweißt. Mittig im Klöpperboden 24 ragt in axialer Richtung ein Anschlussstück 25 heraus, das einen Kanal als Ausblasöffnung 19 für das Kohlendioxid aufweist.

Der ansaugseitige Teil 20 des Gehäuses 2 weist einen Klöpperboden 26 auf. Mittig in den Klöpperboden 26 ist die Ansaugöffnung 1 in das Gehäuse 2 eingebracht. Die Ansaugöffnung 1 und die Ausblasöffnung 19 liegen auf einer Achse A-A', die das zylindrische Gehäuse 2 in axialer Richtung mittig durchquert.

Der Hauptflansch 10 trägt alle Einbauten und bietet Platz für Durchführungen, wie beispielsweise die Stromzuführung oder Temperaturfühler. Der Hauptflansch 10 dient als Grundelement bei der Montage, da alle Einbauten am Hauptflansch 10 befestigt werden.

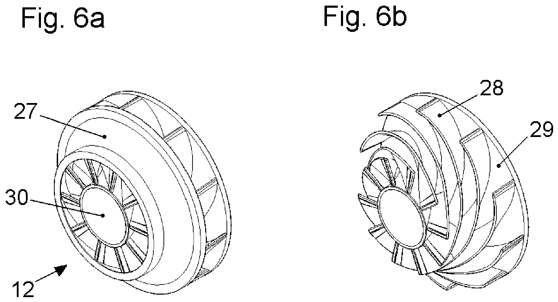

Die Figuren 6a und 6b zeigen den Aufbau der Radial-Laufräder 12. Fig. 6a zeigt den zusammengebauten Zustand mit Deckscheibe 27. Bei Fig. 6b wurde auf die Darstellung der Deckscheibe 27 verzichtet, um das innere des Radial-Laufrades 12 zu zeigen. Die Schaufeln 28 des Radial-Laufrades 12 sind an einem Tragkörper 29 angeformt. Die Deckscheibe 27 wird separat gefertigt und auf den Tragkörper 29 mit seinen Schaufeln 28 aufgesetzt. Die Deckscheibe 27 ist vollflächig mit den Oberkanten der Schaufeln 28 verbunden und rotiert folglich bei Betrieb des Turboverdichters mit der gleichen Drehzahl wie der Tragkörper 29 mit seinen Schaufeln 28. Über die Nabe 30 werden die Radial-Laufräder 12 auf die Welle 11 geschoben.

## Patentansprüche

1. Radial-Turbokompressor mit mindestens zwei Verdichterstufen, wobei ein Motor (5) Radial-Laufräder (12) der Verdichterstufen antreibt, die auf einer Welle (11) angeordnet sind, wobei der Motor (5) und die Verdichterstufen in einem gemeinsamen Gehäuse (2) angeordnet sind und ein Medium durch eine Ansaugöffnung (1) in das Gehäuse (2) eintritt, wobei eine Ausblasöffnung (19) für das Medium in axialer Richtung mittig zur Drehachse der Welle (11) angeordnet ist, wobei an der Welle (11) zwischen dem Motor (5) und den Radial-Laufrädern (12) Radial- (13) und Axiallager (14) angeordnet sind, wobei die Radial- (13) und Axiallager (14) von dem Medium durchströmt werden und wobei das unverdichtete Medium in zwei Teilströme (3, 4) aufgeteilt wird, wobei ein erster Teilstrom (3) an dem Motor (5) vorbei strömt und ein zweiter Teilstrom (4) durch den Motor (5) geführt wird, insbesondere durch den Spalt zwischen dem Rotor (6) und dem Stator (7), wobei die beiden Teilströme (3, 4) vereinigt werden bevor sie in die erste Verdichterstufe eintreten, wo das Medium verdichtet wird und durch die Ausblasöffnung (19) aus dem Gehäuse (2) austritt.

2. Turbokompressor nach Anspruch 1, **dadurch gekennzeichnet, dass** das Medium in der letzten Verdichterstufe zunächst durch ein Radiallaufrad (12) strömt, es dann in einen Diffusor (17) geleitet wird und dann ein Rückführkanal (18) das Medium unmittelbar zu der Ausblasöffnung (19) führt.

3. Turbokompressor nach Anspruch 1 oder 2, **dadurch gekennzeichnet, dass** die Ansaugöffnung (1) in axialer Richtung mittig zur Drehachse der Welle (11) angeordnet ist.

4. Turbokompressor nach einem der Ansprüche 1 bis 3, **dadurch gekennzeichnet, dass** der Rotor (6) des Motors (5) und die Radial-Laufräder (12) an einer gemeinsamen Welle (11) angeordnet sind.

5. Turbokompressor nach einem der Ansprüche 1 bis 4, **dadurch gekennzeichnet, dass** die Oberfläche der Welle (11) und / oder der Bereich zwischen dem Motor (5) und den Radial-Laufrädern (12) derart beschaffen ist, dass ein Wärmeübertrag von einem Bauteil auf das Medium gefördert ist, insbesondere durch eine vergrößerte Oberfläche.

6. Turbokompressor nach einem der Ansprüche 1 bis 5, **dadurch gekennzeichnet, dass** das Gehäuse (2) vertikal geteilt ist.

7. Wärmepumpe umfassend einen Turbokompressor nach einem der Ansprüche 1 bis 6, wobei die anfallende Motorwärme einem Wärmeträgermedium zugeführt. wird.

8. Wärmepumpe nach Anspruch 7, **dadurch gekennzeichnet, dass** das Wärmeträgermedium nach der Aufnahme der Motorwärme komprimiert wird.

## Claims

1. Radial turbocompressor having at least two compressor stages, wherein a motor (5) drives radial impellers (12) of the compressor stages which are arranged on a shaft (11), wherein the motor (5) and the compressor stages are arranged in a common housing (2) and a medium enters the housing (2) through an intake opening (1), wherein a discharge opening (19) for the medium is arranged centrally in the axial direction with respect to the axis of rotation of the shaft (11), wherein radial bearings (13) and axial bearings (14) are arranged on the shaft (11) between the motor (5) and the radial impellers (12), wherein the medium flows through the radial bearings (13) and axial bearings (14), and wherein the uncompressed medium is split into two partial flows (3, 4), wherein a first partial flow (3) flows past the motor (5) and a second partial flow (4) is fed through the motor (5), in particular through the gap between the rotor (6) and the stator (7), wherein the two partial flows (3, 4) are united before entering the first compressor stage, where the medium is compressed and exits the housing (2) through the discharge opening (19).

2. Turbocompressor according to Claim 1, **characterized in that**, in the final compressor stage, the medium first flows through a radial impeller (12), is then guided into a diffuser (17) and then a return duct (18) feeds the medium directly to the discharge opening (19).

3. Turbocompressor according to Claim 1 or 2, **characterized in that** the intake opening (1) is arranged centrally in the axial direction with respect to the axis of rotation of the shaft (11).

4. Turbocompressor according to one of Claims 1 to 3, **characterized in that** the rotor (6) of the motor (5) and the radial impellers (12) are arranged on a common shaft (11).

5. Turbocompressor according to one of Claims 1 to 4, **characterized in that** the surface of the shaft (11) and/or the region between the motor (5) and the radial impellers (12) is produced such that heat is transferred from a component to the medium, in particular by means of an increased surface area.

6. Turbocompressor according to one of Claims 1 to 5, **characterized in that** the housing (2) is split vertically.

7. Heat pump comprising a turbocompressor according to one of Claims 1 to 6, wherein the heat produced by the motor is supplied to a heat transfer medium.

8. Heat pump according to Claim 7, **characterized in that** the heat transfer medium is compressed once it has absorbed the heat from the motor.

## Revendications

1. Turbocompresseur radial comportant au moins deux étages de compresseur, un moteur (5) entraînant des roues mobiles radiales (12) des étages de compresseur qui sont disposés sur un arbre (11), le moteur (5) et les étages de compresseur étant disposés dans un boîtier commun (2) et un fluide entrant dans le boîtier (2) par un orifice d'aspiration (1), un orifice de sortie (19) destiné au fluide étant disposé dans la direction axiale de manière centrée par rapport à l'axe de rotation de l'arbre (11), des paliers radiaux (13) et des paliers axiaux (14) étant disposés au niveau de l'arbre (11) entre le moteur (5) et les roues mobiles radiales (12), les paliers radiaux (13) et les paliers axiaux (14) étant traversés par le fluide et le fluide non comprimé étant divisé en deux flux partiels (3, 4), un premier flux partiel (3) passant devant le moteur (5) et un deuxième fluide partiel (4) étant guidé à travers le moteur (5), notamment par la fente ménagée entre le rotor (6) et le stator (7), les deux fluides partiels (3, 4) s'unissant avant d'entrer dans le premier étage de compresseur où le fluide est comprimé et sortant du boîtier (2) par l'orifice de sortie (19).

2. Turbocompresseur selon la revendication 1, **caractérisé en ce que** le fluide du dernier étage de compresseur s'écoule tout d'abord à travers une roue mobile radiale (12) puis est guidé jusque dans un diffuseur (17) et ensuite un conduit de retour (18) amène le fluide directement à l'orifice de sortie (19).

3. Turbocompresseur selon la revendication 1 ou 2, **caractérisé en ce que** l'ouverture d'aspiration (1) est disposée dans la direction axiale de manière centrée par rapport à l'axe de rotation de l'arbre (11).

4. Turbocompresseur selon l'une des revendications 1 à 3, **caractérisé en ce que** le rotor (6) du moteur (5) et les roues mobiles radiales (12) sont disposés au niveau d'un arbre commun (11).

5. Turbocompresseur selon l'une des revendications 1 à 4, **caractérisé en ce que** la surface de l'arbre (11) et/ou de la zone située entre le moteur (5) et les roues mobiles radiales (12) permet d'effectuer un transfert de chaleur d'un composant au fluide, notamment par une surface agrandie.

6. Turbocompresseur selon l'une des revendications 1 à 5, **caractérisé en ce que** le boîtier (2) est divisé verticalement.

7. Pompe à chaleur comprenant un turbocompresseur selon l'une des revendications 1 à 6, la chaleur du moteur ainsi obtenue étant fournie à un fluide caloporteur.

8. Pompe à chaleur selon la revendication 7, **caractérisée en ce que** le fluide caloporteur est comprimé après réception de la chaleur du moteur.
